# FASCICULE DE BREVET EUROPEEN

(11) **EP 2 836 685 B1**
(45) Date de publication et mention de la délivrance du brevet: **31.07.2019**
(21) Numéro de dépôt: 13715278.1
(22) Date de dépôt: 08.03.2013
(51) Int. Cl.: F01D 11/02, F16J 15/40, F16J 15/42, F16J 15/54, F01D 25/18, F02C 3/067, F02C 7/28, F16J 15/34

(54) **DISPOSITIF D'ETANCHEITE INTER-ARBRES COAXIAUX D'UNE TURBOMACHINE**
VORRICHTUNG ZUR ABDICHTUNG ZWISCHEN DEN KOAXIALEN WELLEN EINER TURBOMASCHINE
DEVICE FOR SEALING BETWEEN THE COAXIAL SHAFTS OF A TURBOMACHINE

(30) Priorité: 05.04.2012 FR 1253133
(43) Date de publication de la demande: 18.02.2015
(73) Titulaire: Safran Aircraft Engines, 75015 Paris (FR)
(72) Inventeur: PIERROT, Arnaud, Jean-Marie, F-77550 Moissy-Cramayel Cedex (FR); MORREALE, Serge, René, F-77550 Moissy-Cramayel Cedex (FR)
(74) Mandataire: Cabinet Camus Lebkiri
(86) Numéro de dépôt international: PCT/FR2013/050485
(87) Numéro de publication internationale: WO 2013/150198

(56) Documents cités:
- EP-A1- 0 083 266
- EP-A1- 0 831 204
- EP-A1- 0 967 424
- EP-A1- 1 496 294
- EP-A2- 2 420 649
- GB-A- 2 216 964

## Description

La présente invention se rapporte au domaine des turbomachines et des systèmes d'étanchéité entre deux arbres tournants coaxiaux.

La présente invention concerne plus particulièrement un dispositif d'étanchéité dynamique agencé entre deux arbres tournants coaxiaux d'une turbomachine.

Dans une turbomachine, il est nécessaire de définir et d'isoler une enceinte entourant un organe mécanique tel qu'un roulement ou un pignon installé entre deux arbres tournants, tels que par exemple le rotor haute pression et le rotor basse pression. Dans cette enceinte, l'huile est injectée pour lubrifier et refroidir l'organe mécanique. L'isolation de l'enceinte nécessite notamment un dispositif d'étanchéité entre les deux arbres tournants.

Il est connu d'utiliser des dispositifs d'étanchéité sans contact dans ce type d'application. Cependant, les dispositifs d'étanchéité sans contact comme décrit dans le document EP 0083266, du type labyrinthes, nécessitent un débit d'air important et il est parfois difficile d'obtenir la pressurisation souhaitée de l'enceinte. De plus, un mélange air-huile se crée dans l'enceinte ce qui nécessite un dispositif de déshuilage avant l'évacuation de l'air. Le compromis est donc difficile à établir et ces dispositifs d'étanchéité ne permettent pas toujours d'obtenir les performances visées. Enfin, ce type de joint nécessite la présence d'un dispositif de déshuilage qui est coûteux, encombrant et lourd du fait du débit d'air huilé important à traiter.

Il est également connu d'utiliser des dispositifs d'étanchéité avec contact, ou joint inter-arbre, de type joint en carbone ou encore joint à brosse, comme par exemple décrit dans le document EP 2420649. Cependant, ces dispositifs sont fragiles et présentent un risque de divergence thermique important en cas de contact entre le joint et les bagues ou glaces métalliques, adjacentes, notamment lors des phases de chariotage, i.e. lors de déplacement axial relatif.

Dans ce contexte, l'invention vise à fournir un dispositif d'étanchéité, adapté pour fonctionner avec des arbres tournants co-rotatifs ou contre-rotatifs, permettant de résoudre les problèmes précités.

A cette fin, l'invention propose un dispositif d'étanchéité inter-arbres coaxiaux d'une turbomachine tel que défini dans la revendication 1.

Ainsi, le dispositif selon l'invention permet de combiner les avantages d'un dispositif d'étanchéité par contact (bonne performances) avec une lubrification du contact permettant de s'affranchir des risques d'usures ou de divergence thermique dans la zone de contact.

Le dispositif d'étanchéité inter-arbres coaxiaux d'une turbomachine selon l'invention peut également présenter une ou plusieurs des caractéristiques ci-dessous, considérées individuellement ou selon toutes les combinaisons techniquement possibles :
- le contact entre ledit joint annulaire et ledit arbre extérieur est assuré par des moyens élastiques ;
- les pistons sont solidaires dudit joint annulaire ;
- l'effort hydraulique exercé sur ladite pluralité de pistons est réalisé par centrifugation d'un fluide hydraulique à l'intérieur dudit vérin ;
- une partie de ladite pluralité de pistons ou l'ensemble de ladite pluralité de pistons présente des orifices aptes à acheminer du fluide hydraulique jusqu'à la zone de contact entre le joint annulaire et l'arbre extérieur ;
- ledit joint annulaire comporte des orifices positionnés en regard des orifices des pistons ;
- le dispositif comporte un segment élastique assurant l'étanchéité entre ledit joint annulaire et ledit arbre intérieur.

L'invention a également pour objet une turbomachine comportant un rotor basse pression et un rotor haute pression caractérisée en ce qu'il comporte un dispositif d'étanchéité selon l'invention pour réaliser l'étanchéité d'une enceinte entourant un organe mécanique entre ledit arbre basse pression et ledit arbre haute pression.

L'invention a également pour objet un procédé d'accostage de deux arbres tournants coaxiaux d'une turbomachine comportant un dispositif d'étanchéité selon l'invention apte à réaliser l'étanchéité d'une enceinte entourant un organe mécanique entre lesdits deux arbres tournants ledit procédé comportant les étapes consistant à :
- accoster une première partie de l'arbre extérieur autour dudit arbre intérieur, ladite première partie comportant des moyens pour solidariser ladite première partie sur la partie principale de l'arbre extérieur ;
- monter ledit dispositif d'étanchéité sur ledit arbre intérieur ;
- bloquer axialement ladite première partie de l'arbre extérieur ;
- accoster la partie principale dudit arbre tournant extérieur avec l'arbre tournant intérieur ;
- solidariser ladite première partie de l'arbre extérieur avec ladite partie principale de l'arbre extérieur ;
- débloquer axialement ladite première partie ;
- ajuster l'accostage de manière à positionner ledit arbre extérieur dans sa position d'utilisation.

Avantageusement, l'étape de blocage axial est réalisée au moyen d'une première nervure festonnée agencée sur ledit arbre extérieur coopérant avec une deuxième nervure festonnée agencée sur ledit vérin formant un système à baïonnette.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre schématiquement une vue d'ensemble un dispositif d'étanchéité inter-arbres coaxiaux selon l'invention positionné dans son environnement entre l'arbre interne et l'arbre extérieur d'une turbomachine ;
- la figure 2 illustre une vue détaillée du dispositif d'étanchéité selon l'invention permettant d'assurer l'étanchéité de l'enceinte comportant un organe mécanique illustrée à la figure 1 ;
- les figures 3 à 10 illustrent schématiquement les différentes étapes du procédé de montage dudit dispositif d'étanchéité selon l'invention dans une turbomachine comportant un arbre tournant basse pression et un arbre tournant haute pression ;
- la figure 11 illustre le principe du système à baïonnette utilisé pour l'assemblage des deux arbres tournants lors du positionnement du dispositif d'étanchéité.

Dans toutes les figures, les éléments communs portent les mêmes numéros de référence sauf précision contraire.

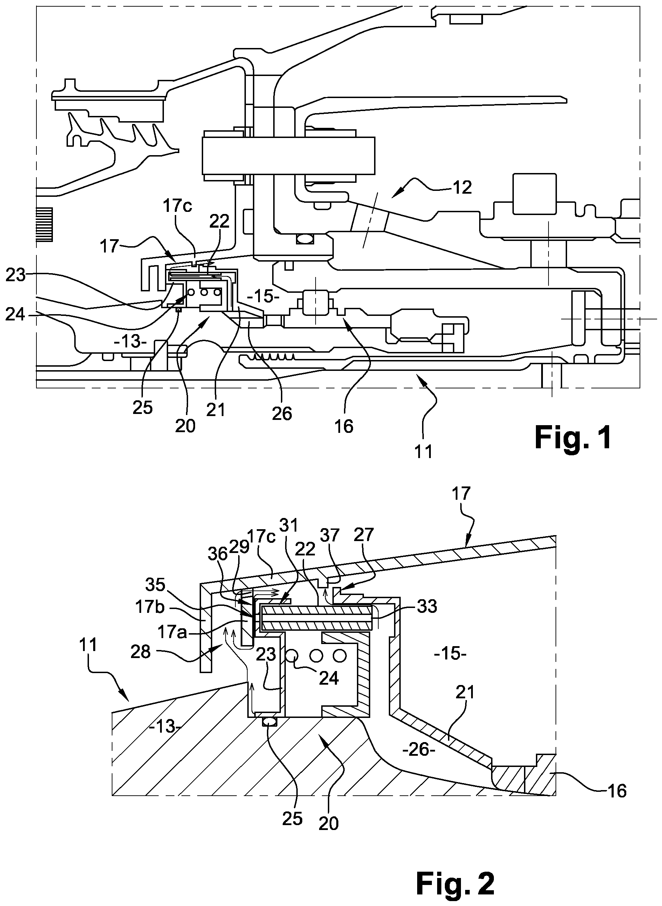

La figure 1 représente une vue d'ensemble d'un dispositif d'étanchéité 20 positionné au niveau d'une enceinte 15 entourant un organe mécanique 16 installé entre un arbre tournant intérieur 11 et un arbre tournant extérieur 12. La figure 2 est une vue plus détaillée de l'enceinte 15 et du dispositif d'étanchéité illustrés à la figure 1.

Dans l'exemple de réalisation illustré aux figures 1 et 2, l'arbre tournant intérieur 11 est un rotor de turbine haute pression d'une turbomachine et l'arbre tournant extérieur 12 est un rotor de turbine basse pression d'une turbomachine.

Le dispositif d'étanchéité 20 selon l'invention comporte :
- un vérin 21 solidarisé sur l'arbre intérieur 11, et plus particulièrement sur le tourillon 13 du rotor haute pression selon le mode de réalisation illustré à la figure 1 ;
- des moyens d'étanchéité 23 formés par un joint de forme annulaire positionné concentriquement par rapport à l'arbre intérieur 11 ;
- des moyens élastiques 24, tels que par exemple des ressorts de compression, aptes à exercer un effort sur les moyens d'étanchéité 23 ;
- des pistons 22 répartis sur la circonférence du joint annulaire 23, agencé entre le vérin 21 et les moyens d'étanchéité 23 de manière à ce que les pistons actionnés par le vérin 21 exercent un effort sur les moyens d'étanchéité 23 ;
- un segment annulaire 25 permettant de limiter les fuites de fluide hydraulique en bordure du joint annulaire 23 entre le joint annulaire 23 et le tourillon 13 de l'arbre intérieur 11.

Selon le mode de réalisation de l'invention, illustré aux figures 1 et 2, le segment annulaire 25 est agencé dans une gorge annulaire aménagée à cet effet dans le tourillon 13. Dans ce positionnement avantageux, le segment annulaire 25 ne nécessite pas de précontrainte particulière puisque le segment s'expanse sous l'effet de la force centrifuge, assurant ainsi l'étanchéité entre le joint annulaire 23 et le tourillon 13.

En fonctionnement, l'ensemble du dispositif d'étanchéité 20 tourne au régime de l'arbre interne 11. Ainsi, les seuls efforts de frottement auxquels le segment annulaire 25 est soumis sont dus au déplacement axial relatif entre les deux arbres tournants qui ne génère aucun échauffement. Ces déplacements axiaux sont classiquement appelés « chariotage » dans le domaine des turbomachines et correspond au déplacement axial relatif entre le rotor haute pression et le rotor basse pression pendant les phases de fonctionnement transitoires de la turbomachine.

Le joint annulaire 23 est un joint métallique ou un joint carbone.

Le joint annulaire 23 présente une pluralité de perçages 31 non débouchant répartis de façon circulaire, chacun desdits perçages étant adapté pour recevoir un piston 22. Le diamètre des perçages est adapté pour réaliser un assemblage en force avec les pistons 22, de manière à solidariser et à lier cinématiquement les pistons 22 avec le joint annulaire 23.

La paroi extérieure 36 du joint annulaire 23 est apte à venir en contact avec une première paroi annulaire 17a constituant un élément du flasque 17 de l'arbre extérieur 12 et bordant l'enceinte 15, de manière à permettre une étanchéité de cette enceinte 15 ; le flasque 17 comportant une première paroi annulaire 17a et une deuxième paroi annulaire 17b.

La paroi extérieure 36 du joint annulaire 23 est maintenue contre le flasque annulaire 17a par une pression des pistons 22 qui sont actionnés par la centrifugation d'un fluide hydraulique dans le vérin 21 lors du fonctionnement de la turbomachine et par les moyens élastiques 24, tels que des ressorts, positionnés entre le joint annulaire 23 et le vérin 21 de manière à assurer un contact permanant entre le joint 23 et le premier flasque 17a lors des phases d'arrêt de la turbomachine, notamment lorsque la pression d'huile exercée sur les pistons 22 est trop faible.

Une cuvette 26 est aménagée en partie inférieure du vérin 21 de manière assurer une réserve d'huile permanente. Cette réserve d'huile est alimentée par de l'huile dédiée, et acheminée, par exemple par la bague intérieure du palier à rouleaux dans le cadre d'une application dans une turbomachine comme illustré sur les figures 1 à 2.

Le nombre de piston 22 sera ajusté de manière à équilibrer les efforts axiaux sur le joint annulaire 23 en prenant en compte :
- les pressions d'air amont et aval ;
- la force des moyens élastiques 24 ;
- la résistance au déplacement du joint annulaire 23 engendrée notamment par le frottement de la liaison segment joint annulaire.

Les pistons 22 sont avantageusement dimensionnés de manière à pouvoir assurer un contact permanent entre le joint annulaire 23 et la première paroi annulaire 17a dans toutes les situations de fonctionnement d'une turbomachine, y compris lors des transitoires, et de manière à engendrer une puissance thermique due au frottement du joint 23 contre la première paroi annulaire 17a la plus faible possible.

L'ensemble ou une partie des pistons 22 présentent dans leur structure des perçages traversant longitudinalement la structure du piston 22 de manière à former un canal interne apte à acheminer un écoulement de fluide hydraulique du vérin 21 jusqu'à la zone de contact entre le joint annulaire 23 et le flasque annulaire 17a via des injecteurs aménagés à l'extrémité des pistons 22. A cet effet, la paroi formant le fond des perçages non débouchant 31 présente un orifice, en regard des perçages 33 des pistons 22, communiquant avec une gorge annulaire 35 agencée sur la paroi extérieure 36.

Un tel agencement autorise ainsi une circulation de fluide hydraulique du vérin 21 jusqu'à la paroi extérieure 36 assurant ainsi une lubrification permanente de la zone de contact par la réalisation d'un film d'huile sur la circonférence du joint annulaire 23.

La lubrification de la zone de contact permet également d'assurer un refroidissement permanent de cette zone entre le joint annulaire 23 et la première paroi annulaire 17a, prévenant ainsi une usure prématurée du dispositif d'étanchéité 20.

La position radiale des perçages non débouchant 31, par rapport à l'axe de révolution de l'anneau correspond au diamètre d'implantation des pistons 22 dans le vérin 21.

Une autre partie de l'huile sortant des pitons 22 fuit par le jeu présent entre les pistons 22 et le vérin 21 de manière assurer une lubrification entre les deux pièces, notamment lors des déplacements relatifs dus aux chariotages lors des transitoires.

L'ensemble de l'huile est récupéré sur la paroi conique 17c par effet centrifuge et évacué vers un système classique de récupération d'huile de l'enceinte 15 formé par une canalisation en fond d'enceinte relié à une pompe de récupération

Pour récupérer les éventuelles fuites d'huile qui viendraient de la liaison segment/joint ou encore joint/flasque, la première paroi annulaire 17a et la deuxième paroi annulaire 17b forment une cuvette de récupération d'huile 28. Cette cuvette de récupération 28 est située en amont du système d'étanchéité 20. Au fond de cette cuvette de récupération 28, la première paroi annulaire 17a comporte au moins un perçage 29 au niveau de la jonction entre la première paroi annulaire 17a et la paroi conique 17c permettant de réintroduire ces fuites dans l'enceinte 15. Le diamètre intérieur de la deuxième paroi annulaire 17b (i.e. son diamètre d'ouverture) est inférieur au diamètre intérieur de la première paroi annulaire 17a de manière à ce que la deuxième paroi annulaire 17b joue le rôle d'une barrière de récupération des fuites de fluide hydraulique lors du fonctionnement de la turbomachine. Avantageusement, le diamètre intérieur de cette deuxième paroi annulaire 17b doit être minimisé au maximum en fonction des contraintes géométriques de l'environnement.

La paroi conique 17c présente également une nervure festonnée 37. Cette nervure 37 est utilisée pour la phase de montage et sera détaillée plus loin. Cette nervure festonnée 37 présente donc des parties évidées sur la circonférence de la paroi conique 17c permettant à l'huile de s'écouler efficacement sur cette paroi 17c. De manière à améliorer davantage l'écoulement de l'huile sur cette paroi, les parties pleines de la nervure festonnée 37 peuvent présenter des perçages.

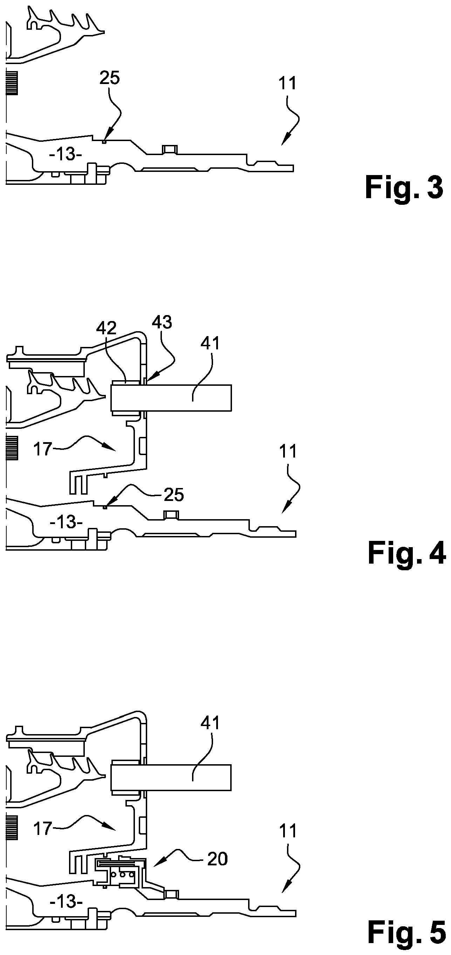

Les figures 3 à 10 illustrent les différentes étapes de montage du dispositif d'étanchéité 20 dans une turbomachine comportant un arbre haute pression 11 et un arbre basse pression 12.

La figure 3 illustre la première étape du procédé de montage consistant à installer le segment 25 dans le logement prévu à cet effet dans la partie aval du tourillon 13 de l'arbre haute pression 11.

La figure 4 illustre la deuxième étape du procédé de montage. Cette deuxième étape consiste à amener le flasque 17 de la turbine basse pression comportant les parois annulaires 17a et 17b. Ce flasque est équipé de goujons qui permettront d'assembler cette partie de la turbine basse pression sur le module de turbine basse pression de manière à former l'arbre basse pression complet. Les goujons 41 sont solidaires du flasque 17 via des écrous 42 et des perçages oblongues 43.

La figure 5 illustre la troisième étape du procédé de montage consistant à la mise en place du dispositif d'étanchéité 20.

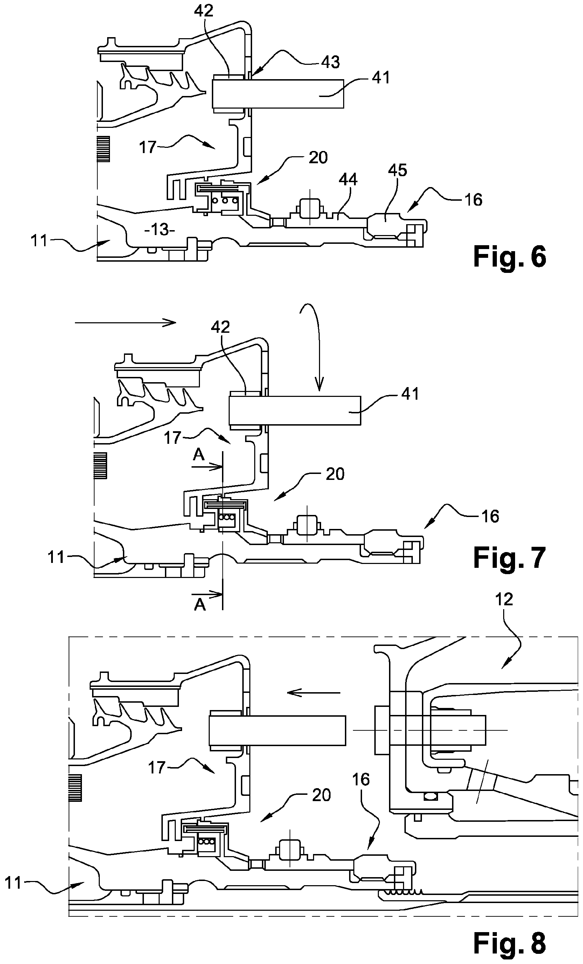

La figure 6 illustre la quatrième étape du procédé de montage. Cette quatrième étape du procédé consiste à positionner l'organe mécanique 16 sur l'arbre haute pression. Dans le mode de réalisation illustré, l'organe mécanique 16 est formé par le palier n°4 solidarisé au moyen d'écrou ; l'ensemble formant ainsi le module complet de l'arbre haute pression 11.

La figure 7 illustre la cinquième étape du procédé de montage selon l'invention consistant à verrouiller la position du flasque 17 au moyen d'un système « baïonnette ». Le système baïonnette est formé par la nervure festonnée 37 agencée sur la paroi conique 17c du flasque 17 de l'arbre basse pression 12 ainsi que par une nervure festonnée 27 agencée sur le vérin 21.

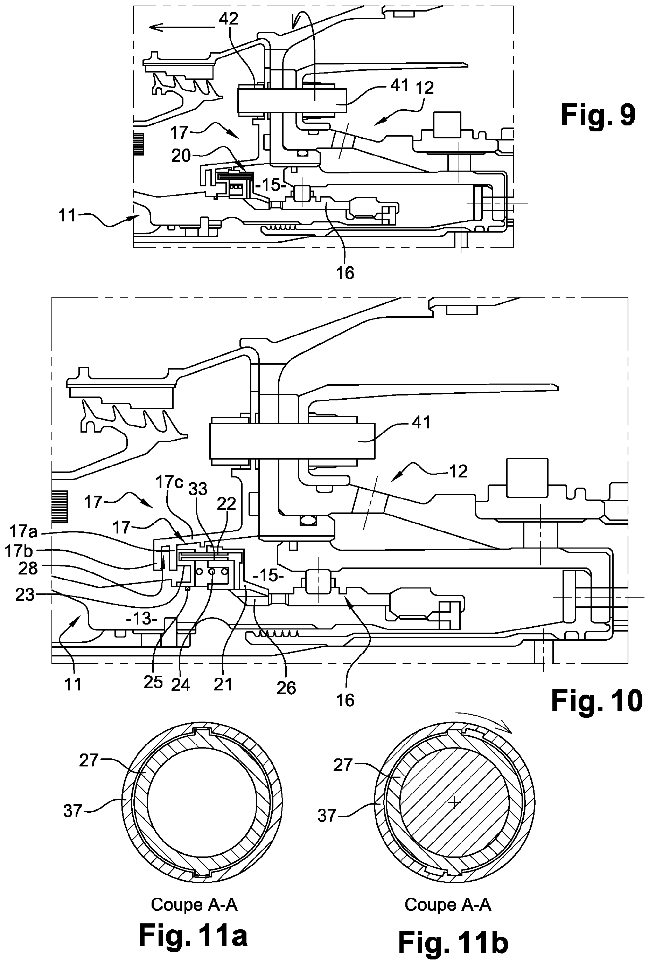

Les figures 11a et 11b illustrent plus précisément le principe du système de verrouillage à baïonnette formé par les deux nervures festonnées 37, 27 (seulement deux dents étant représentées de manière à simplifier la figure).

Plus précisément, la figure 11a représente la position déverrouillée du système dans laquelle le flasque 17 de l'arbre basse pression 12 est mobile axialement par rapport au dispositif d'étanchéité 20 ; la figure 11b représente la position verrouillée du système dans laquelle le flasque 17 est bloqué axialement par rapport au dispositif 20.

Ainsi dans cette cinquième étape de verrouillage, le flasque 17 est déplacé axialement de manière s'engager dans la nervure festonnée 27 du vérin 21 faisant office de centreur. Une fois engagée, une légère rotation du flasque 17 selon son axe de rotation permet de passer de la position déverrouillée à la position verrouillée illustrée à la figure 11b maintenant ainsi axialement et radialement le flasque 17 en position.

Dans la position verrouillée, les moyens élastiques 24 sont comprimés.

La figure 8 illustre à la sixième étape du procédé consistant à accoster le module turbine basse pression préassemblé et équilibré sur le flasque 17 en position. A cet effet, le module présente des perçages permettant la solidarisation du module et du flasque 17 via les goujons 41 et des écrous. Ainsi le module et le flasque assemblés forment l'arbre basse pression 12 complet.

La figure 9 illustre la septième étape consistant à déverrouiller le système à baïonnette par rotation de l'arbre basse pression 12 dans le sens inverse du sens de rotation de la cinquième étape, puis à désengager l'arbre basse pression du système d'étanchéité par coulissement axial de manière à le mettre en position (position axiale). Lors du déplacement axiale de l'arbre basse pression 12, les moyens élastiques 24 se détendent et permettent de venir plaquer le joint annuaire 23 sur la première paroi annulaire 17a, comme décrit précédemment, de manière à assurer l'étanchéité de l'enceinte 15 dès le démarrage de la turbomachine mais également lors des phases d'arrêt de la turbomachine.

La figure 10 illustre la position finale des arbres tournants ainsi que du dispositif d'étanchéité 20.

Ainsi, le dispositif selon l'invention permet d'assurer une étanchéité efficace et robuste entre deux pièces tournantes (par exemple un arbre haute pression et un arbre basse pression d'une turbomachine) par la réalisation d'une étanchéité par contact, offrant des bonnes performances, et d'une lubrification permanente du contact évitant ainsi les risques d'échauffement et de divergence thermique.

L'invention a été principalement décrite avec un arbre haute pression et un arbre basse pression d'une turbomachine ; toutefois, l'invention est également applicable aux autres arbres tournants coaxiaux.

Le dispositif selon l'invention est particulièrement adapté pour être utilisé avec deux arbres tournants contre-rotatifs : toutefois, l'invention est également applicable avec deux arbres tournants co-rotatifs.

## Revendications

1. Dispositif d'étanchéité (20) inter-arbres coaxiaux d'une turbomachine comportant un joint annulaire (23) apte à réaliser une étanchéité par contact avec l'arbre extérieur (12), ledit dispositif étant **caractérisé en ce qu'**il comporte des moyens de lubrification aptes à lubrifier la zone de contact entre ledit joint annulaire (23) et ledit arbre extérieur (12), et **en ce que** le contact entre ledit joint annulaire (23) et ledit arbre extérieur (12) est assuré par des moyens hydrauliques (22, 21) formés par un vérin (21) solidarisé sur l'arbre intérieur (11) et coopérant avec une pluralité de pistons (22) de manière à exercer un effort sur ledit joint annulaire (23).

2. Dispositif d'étanchéité (20) inter-arbres coaxiaux d'une turbomachine selon la revendication précédente **caractérisé en ce que** le dispositif comporte des moyens élastiques (24) réalisant un contact entre ledit joint annulaire (23) et ledit arbre extérieur (12).

3. Dispositif d'étanchéité (20) inter-arbres coaxiaux d'une turbomachine selon l'une des revendications précédentes **caractérisé en ce que** les pistons (22) sont solidaires dudit joint annulaire (23).

4. Dispositif d'étanchéité (20) inter-arbres coaxiaux d'une turbomachine selon l'une des revendications 1 à 3 **caractérisé en ce que** l'effort hydraulique exercé sur ladite pluralité de pistons est réalisé par centrifugation d'un fluide hydraulique à l'intérieur dudit vérin (21).

5. Dispositif d'étanchéité (20) inter-arbres coaxiaux d'une turbomachine selon l'une des revendications 1 à 4 **caractérisé en ce qu'**une partie de ladite pluralité de pistons (22) ou l'ensemble de ladite pluralité de pistons (22) présente des orifices (33) aptes à acheminer du fluide hydraulique jusqu'à la zone de contact entre le joint annulaire (23) et l'arbre extérieur (12).

6. Dispositif d'étanchéité (20) inter-arbres coaxiaux d'une turbomachine selon la revendication précédente **caractérisé en ce que** ledit joint annulaire (23) présente une gorge annulaire (35) agencée en regard des orifices (33) des pistons (22).

7. Dispositif d'étanchéité (20) inter-arbres coaxiaux d'une turbomachine selon l'une des revendications précédentes **caractérisé en ce qu'**il comporte un segment élastique (25) assurant l'étanchéité entre ledit joint annulaire (23) et ledit arbre intérieur (11).

8. Turbomachine comportant un rotor basse pression (12) et un rotor haute pression (11) **caractérisée en ce qu'**elle comporte un dispositif d'étanchéité (20) selon l'une des revendications 1 à 7 pour réaliser l'étanchéité d'une enceinte (15) entourant un organe mécanique (16) entre l'arbre basse pression (12) et l'arbre haute pression (11).

9. Procédé d'accostage de deux arbres tournants (11, 12) coaxiaux d'une turbomachine comportant un dispositif d'étanchéité (20) selon l'une des revendications 1 à 7 apte à réaliser l'étanchéité d'une enceinte (15) entourant un organe mécanique (16) entre lesdits deux arbres tournants (11, 12), ledit procédé comportant les étapes consistant à :
- accoster une première partie (17) de l'arbre extérieur autour dudit arbre intérieur (11), ladite première partie (17) comportant des moyens (41) pour solidariser ladite première partie (17) sur la partie principale de l'arbre extérieur ;
- monter ledit dispositif d'étanchéité (20) sur ledit arbre intérieur (11) ;
- bloquer axialement ladite première partie (17) de l'arbre extérieur (12) ;
- accoster la partie principale dudit arbre tournant extérieur (12) avec l'arbre tournant intérieur (11),
- solidariser ladite première partie (17) de l'arbre extérieur avec ladite partie principale de l'arbre extérieur (12) ;
- débloquer axialement ladite première partie (17) ;
- ajuster l'accostage de manière à positionner ledit arbre extérieur dans sa position d'utilisation.

10. Procédé d'accostage de deux arbres tournants (11, 12) coaxiaux d'une turbomachine selon la revendication précédente **caractérisé en ce que** ladite étape de blocage axial est réalisée au moyen d'une première nervure festonnée (37) agencée sur ledit arbre extérieur (12) coopérant avec une deuxième nervure festonnée (27) agencée sur ledit vérin (21) formant un système à baïonnette.

## Patentansprüche

1. Abdichtvorrichtung (20) von koaxialen Zwischenwellen einer Turbomaschine, umfassend eine ringförmige Dichtung (23), die geeignet ist, eine Dichtung per Kontakt mit einer äußeren Welle (12) zu realisieren, wobei die genannte Vorrichtung **dadurch gekennzeichnet ist, dass** sie Schmiermittel umfasst, die geeignet sind, die Kontaktzone zwischen der genannten ringförmigen Dichtung (23) und der genannten äußeren Welle (12) zu schmieren und dass der Kontakt zwischen der genannten ringförmigen Welle (23) und der genannten äußeren Welle (12) durch hydraulische Mittel (22, 21) gewährleistet ist, die durch einen Zylinder (21) gebildet sind, der auf der inneren Welle (11) fest befestigt ist und mit einer Vielzahl von Kolben (22) derart zusammenwirkt, dass eine Kraft auf die genannte ringförmige Dichtung (23) ausgeübt wird.

2. Abdichtvorrichtung (20) von koaxialen Zwischenwellen einer Turbomaschine gemäß dem voranstehenden Anspruch, **dadurch gekennzeichnet, dass** die Vorrichtung elastische Mittel (24) umfasst, die einen Kontakt zwischen der genannten ringförmigen Dichtung (23) und der genannten äußeren Welle (12) realisieren.

3. Abdichtvorrichtung (20) von koaxialen Zwischenwellen einer Turbomaschine gemäß einem der voranstehenden Ansprüche, **dadurch gekennzeichnet, dass** die Kolben (22) mit der genannten ringförmigen Dichtung (23) fest verbunden sind.

4. Abdichtvorrichtung (20) von koaxialen Zwischenwellen einer Turbomaschine gemäß einem der voranstehenden Ansprüche 1 bis 3, **dadurch gekennzeichnet, dass** die hydraulische Kraft, die auf die genannte Vielzahl von Kolben ausgeübt ist, per Zentrifugieren eines hydraulischen Mediums im Innern des genannten Zylinders (21) realisiert ist.

5. Abdichtvorrichtung (20) von koaxialen Zwischenwellen einer Turbomaschine gemäß einem der Ansprüche 1 bis 4, **dadurch gekennzeichnet, dass** ein Teil der genannten Vielzahl von Kolben (22) oder alle der genannten Vielzahl von Kolben (22) Öffnungen (33) aufweist / aufweisen, die geeignet sind, hydraulisches Medium bis zur Kontaktzone zwischen der ringförmigen Dichtung (23) und der äußeren Welle (12) zu verbringen.

6. Abdichtvorrichtung (20) von koaxialen Zwischenwellen einer Turbomaschine gemäß dem voranstehenden Anspruch, **dadurch gekennzeichnet, dass** die genannte ringförmige Dichtung (23) eine ringförmige Auskehlung (35) aufweist, die gegenüber den Öffnungen (33) der Kolben (22) angeordnet ist.

7. Abdichtvorrichtung (20) von koaxialen Zwischenwellen einer Turbomaschine gemäß einem der voranstehenden Ansprüche, **dadurch gekennzeichnet, dass** sie ein elastisches Segment (25) umfasst, das die Abdichtung zwischen der genannten ringförmigen Dichtung (23) und der genannten inneren Welle (11) gewährleistet.

8. Turbomaschine, umfassend einen Niedrigdruckrotor (12) und einen Hochdruckrotor (11), **dadurch gekennzeichnet, dass** sie eine Abdichtvorrichtung (20) gemäß einem der Ansprüche 1 bis 7 umfasst, um die Abdichtung einer Einfassung (15) zu realisieren, die ein mechanisches Organ (16) zwischen der Niedrigdruckwelle (12) und der Hochdruckwelle (11) umgibt.

9. Andockverfahren von zwei sich drehenden koaxialen Wellen (11, 12) einer Turbomaschine, umfassend eine Abdichtvorrichtung (20) gemäß einem der Ansprüche 1 bis 7, die geeignet ist, um die Abdichtung einer Einfassung (15) zu realisieren, die ein mechanisches Organ (16) zwischen den genannten zwei sich drehenden Wellen (11, 12) zu realisieren, wobei das genannte Verfahren die Schritte umfasst, bestehend im:
- Andocken eines ersten Teils (17) der äußeren Welle um die genannte innere Welle (11), wobei der genannte erste Teil (17) Mittel (41) zum festen Befestigen des genannten ersten Teils (17) auf dem Hauptteil der äußeren Welle umfasst;
- Montieren der genannten Abdichtvorrichtung (20) auf der genannten inneren Welle (11);
- axialen Blockieren des genannten ersten Teils (17) der äußeren Welle (12);
- Andocken des Hauptteils der genannten äußeren, sich drehenden Welle (12) an der sich drehenden inneren Welle (11),
- festen Befestigen des genannten ersten Teils (17) der äußeren Welle mit dem genannten Hauptteil der äußeren Welle (12);
- axialen Lösen des genannten ersten Teils (17);
- Justieren des Andockens derart, dass die genannte äußere Welle in ihrer Nutzungsposition positioniert ist.

10. Andockverfahren von zwei sich drehenden, koaxialen Wellen (11, 12) einer Turbomaschine gemäß dem voranstehenden Anspruch, **dadurch gekennzeichnet, dass** der genannte axiale Blockierungsschritt mittels einer ersten gekröselten Rippung (37) realisiert ist, die auf der genannten äußeren Welle (12) angeordnet ist, welche mit einer zweiten gekröselten Rippung (27) zusammenwirkt, die auf dem genannten Zylinder (21) ein Bajonettsystem bildet.

## Claims

1. A device (20) for sealing between the coaxial shafts of a turbomachine including an annular seal (23) able to perform sealing by contact with the outer shaft (12), said device being **characterised in that** it includes lubricating means able to lubricate the region of contact between said annular seal (23) and said outer shaft (12), and wherein the contact between said annular seal (23) and said outer shaft (12) is ensured by hydraulic means (22, 21) formed by a cylinder (21) secured on the inner shaft (11) and cooperating with a plurality of pistons (22) so as to exert a strain onto said annular seal (23).

2. The device (20) for sealing between the coaxial shafts of a turbomachine according to the preceding claim, **characterised in that** said device comprises elastic means (24) making a contact between said annular seal (23) and said outer shaft (12).

3. The device (20) for sealing between the coaxial shafts of a turbomachine according to one of the preceding claims, **characterised in that** the pistons (22) are integral with said annular seal (23).

4. The device (20) for sealing between the coaxial shafts of a turbomachine according to one of claims 1 à 3, **characterised in that** the hydraulic strain exerted on said plurality of pistons is made by centrifugation of a hydraulic fluid inside said cylinder (21).

5. The device (20) for sealing between the coaxial shafts of a turbomachine according to one of claims 1 to 4, **characterised in that** part of said plurality of pistons (22) or all of said plurality of pistons (22) has ports (33) able to convey hydraulic fluid to the region of contact between the annular seal (23) and the outer shaft (12).

6. The device (20) for sealing between the coaxial shafts of a turbomachine according to the preceding claim, **characterised in that** said annular seal (23) has an annular groove (35) arranged facing the ports (33) of the pistons (22).

7. The device (20) for sealing between the coaxial shafts of a turbomachine according to one of the preceding claims, **characterised in that** it includes an elastic segment (25) ensuring sealing between said annular seal (23) and said inner shaft (11).

8. A turbomachine including a low pressure rotor (12) and a high pressure rotor (11) **characterised in that** it includes a sealing device (20) according to one of claims 1 to 7, to perform sealing of an enclosure (15) surrounding a mechanical member (16) between the low pressure shaft (12) and the high pressure shaft (11).

9. A method for fastening two coaxial rotating shafts (11, 12) of a turbomachine including a sealing device (20) according to one of claims 1 to 7, able to perform sealing of an enclosure (15) surrounding a mechanical member (16) between said two rotating shafts (11, 12), said method including the steps of:
- fastening a first part (17) of the outer shaft about said inner shaft (11), said first part (17) comprising means (41) for securing said first part (17) on said main part of the outer shaft;
- mounting said sealing device (20) on said inner shaft (11);
- axially blocking said first part (17) of the outer shaft (12);
- fastening the main part of said outer rotating shaft (12) with the inner rotating shaft (11),
- securing said first part (17) of the outer shaft with said main part of the outer shaft (12);
- axially deblocking said first part (17);
- adjusting the fastening so as to position said outer shaft in its operating position.

10. The method for fastening two coaxial rotating shaft (11, 12) of a turbomachine according to the preceding claim, **characterised in that** said axial blocking step is made by means of a first scalloped rib (37) arranged on said outer shaft (12) cooperating with a second scalloped rib (27) arranged on said cylinder (21) forming a bayonet system.
